# EUROPÄISCHE PATENTANMELDUNG

(11) **EP 2 928 022 A1**
(43) Veröffentlichungstag der Anmeldung: **07.10.2015**
(21) Anmeldenummer: 15157789.7
(22) Anmeldetag: 05.03.2015
(51) Int. Cl.: H01R 12/71, H01R 12/57

(54) **Steckverbinderelement zur Montage auf einer Leiterplatte, Halbleiterschaltung mit einer solchen Leiterplatte und Kraftfahrzeugsteuergerät mit einer solchen Halbleiterschaltung**

(30) Priorität: 20.03.2014 DE 102014205265
(71) Anmelder: Automotive Lighting Reutlingen GmbH, 72762 Reutlingen (DE)
(72) Erfinder: Bormann, Uwe, 89520 Heidenheim (DE); Hiegler, Michael, 72760 Reutlingen (DE); Leippert, Anna, 72768 Reutlingen (DE)
(74) Vertreter: DREISS Patentanwälte PartG mbB

(57) **Zusammenfassung**

Die Erfindung betrifft ein Steckverbinderelement (17) zur Montage auf einer Leiterplatte (13), eine Halbleiterschaltung (12) mit einer solchen Leiterplatte (13) sowie ein Kraftfahrzeugsteuergerät (9) mit einer solchen Halbleiterschaltung (12). Es wird vorgeschlagen, dass das Steckverbinderelement (17) ausgebildet ist, von einer ersten Seite der Leiterplatte (13) aus auf die Leiterplatte (13) aufgesetzt und an dieser befestigt und kontaktiert zu werden, und zumindest teilweise durch eine in der Leiterplatte (13) ausgebildete Öffnung (14) hindurchzuragen, so dass eine Kontaktierung des Steckverbinderelements (17) mit einem entsprechenden komplementären Steckerverbinderelement (20) über das durch die Öffnung (14) der Leiterplatte (13) hindurchragende Teil (17a) des Steckverbinderelements (17) von einer der ersten Seite der Leiterplatte (13) gegenüberliegenden zweiten Seite der Leiterplatte (13) aus erfolgen kann. (Figur 2)

## Beschreibung

Die vorliegende Erfindung betrifft ein Steckverbinderelement zur Montage auf einer Leiterplatte. Ferner betrifft die Erfindung eine Halbleiterschaltung umfassend eine Leiterplatte, auf der Leiterbahnen ausgebildet sind und zumindest ein Steckverbinderelement montiert ist. Schließlich betrifft die vorliegende Erfindung auch ein Kraftfahrzeugsteuergerät umfassend ein Gehäuse und eine darin angeordnete Halbleiterschaltung. Die Halbleiterschaltung umfasst eine Leiterplatte, auf der Leiterbahnen ausgebildet sind und zumindest ein Steckverbinderelement montiert ist.

Ein Steckverbinderelement kann als ein Steckerelement eines Steckverbinders oder als ein Buchsenelement eines Steckverbinders ausgebildet sein. Ein Steckerelement und das entsprechende Buchsenelement bilden zusammen einen Steckverbinder. Wenn das Steckverbinderelement als ein Steckerelement ausgebildet ist, verfügt es über Kontaktstifte, die mit entsprechenden Kontaktbuchsen eines passenden Buchsenelements des Steckverbinders in Eingriff treten können, um eine elektrische Verbindung zwischen den Kontaktstiften und den Kontaktbuchsen bzw. zwischen dem Steckerelement und dem Buchsenelement herstellen zu können. Wenn das Steckverbinderelement als ein Buchsenelement ausgebildet ist, verfügt es über Kontaktbuchsen, die mit entsprechenden Kontaktstiften eines passenden Steckerelements des Steckverbinders in Eingriff treten können, um eine elektrische Verbindung zwischen den Kontaktstiften und den Buchsenelementen bzw. zwischen dem Steckerelement und dem Buchsenelement herstellen zu können.

Das Steckverbinderelement (Steckerelement oder Buchsenelement) dient zur Herstellung eines elektrischen Kontakts mit einem entsprechenden komplementären Steckverbinderelement (Buchsenelement bzw. Steckerelement). Das komplementäre Steckverbinderelement kann ein- oder mehrteilig ausgebildet sein. Insbesondere ist es denkbar, dass das komplementäre Steckverbinderelement zweiteilig ausgebildet ist, wobei die beiden Teilelemente bei der Montage zusammengefügt und anschließend eingesteckt werden. Derartige komplementäre Steckverbinderelement sind bspw. zur Kontaktierung von Gasentladungslampen bekannt. Dabei kann ein erstes Teilelement die Kontakte für die Energieversorgung und Steuersignale umfassen und ein zweites Teilelement eine abgeschirmte Verbindung zu der Gasentladungslampe bilden. Das zweite Teilelement kann auch zur Versorgung anderer Lichtquellen dienen, bspw. von LEDs.

Das Steckverbinderelement kann auf beliebige Weise auf der Leiterplatte montiert, d.h. mechanisch befestigt und elektrisch kontaktiert sein. Denkbar ist bspw. eine Montage des Steckverbinderelements nach Art eines oberflächenmontierten Bauelements (sog. Surface Mounted Device, SMD), wenn das Steckverbinderelement als ein unbedrahtetes Bauteil ausgebildet ist. Dabei verfügt das Steckverbinderelement über Kontaktpunkte, mit denen es an lötfähigen Anschlussflächen der Leiterplatte direkt, d.h. ohne Drähte auf die Leiterplatte gelötet wird. Denkbar ist in diesem Zusammenhang bspw. das sog. Reflow-Lötverfahren. Das montierte SMD-Steckverbinderelement ist auf der Leiterplatte sowohl mechanisch befestigt als auch elektrisch kontaktiert. Die entsprechende Technik wird als Oberflächenmontage (Surface Mounting Technology, SMT) bezeichnet. Zur zusätzlichen mechanischen Befestigung des Steckverbinderelements auf der Leiterplatte kann es auf der Leiterplatte festgeklebt werden.

Ebenfalls denkbar ist es, dass ein als bedrahtetes Bauteil ausgebildetes Steckverbinderelement mittels Durchkontaktierung auf der Leiterplatte montiert wird. Dabei sind Vertiefungen oder Bohrungen in der Leiterplatte vorhanden, die katalytisch, elektrolytisch und/oder auf andere Weise mit einer elektrisch leitfähigen Metallbeschichtung versehen sind. Die durchkontaktierten Bohrungen dienen als Lötaugen, in welche Drähte des Steckverbinderelements eingeführt und verlötet werden. Damit ist sowohl eine mechanische Befestigung als auch eine elektrische Kontaktierung des Steckverbinderelements auf der Leiterplatte gegeben.

Aus dem Stand der Technik sind Steckverbinderelemente zur Montage auf einer Leiterplatte in stehender und liegender Bauweise bekannt. Bei einer stehenden Montage liegt eine Steckrichtung, in der ein anderes entsprechendes passendes komplementäres Steckverbinderelement in das auf der Leiterplatte montierte Steckverbinderelement eingesteckt wird, in etwa senkrecht zu einer Flächenerstreckung der Leiterplatte. Bei einer liegenden Montage liegt die Steckrichtung in etwa parallel zur Flächenerstreckung der Leiterplatte. Die Steckverbinderelemente werden von einer bestimmten Seite, der sog. Bestückungsseite der Leiterplatte, aus auf der Leiterplatte montiert. Bei den bekannten Steckverbinderelementen bedeutet dies, dass die Steckverbinderelemente von dieser Seite aus auch mit dem entsprechenden komplementären Steckverbinderelement kontaktiert werden müssen. Die Steckrichtung eines auf einer Leiterplatte montierten Steckverbinderelements ist also im Stand der Technik immer auf die Bestückungsseite gerichtet oder liegt auf der Bestückungsseite, von der aus das Steckverbinderelement auf der Leiterplatte montiert worden ist. Im kontaktierten Zustand des Steckverbinders liegen also beide Steckverbinderelemente, die zusammengesteckt den Steckverbinder bilden, auf der gleichen Seite der Leiterplatte, nämlich der Bestückungsseite.

Ausgehend von dem beschriebenen Stand der Technik liegt der vorliegenden Erfindung die Aufgabe zugrunde, ein Steckverbinderelement der eingangs genannten Art dahingehend auszugestalten und weiterzubilden, dass eine Kontaktierung mit einem entsprechenden komplementären Steckverbinderelement auch von einer anderen als der Bestückungsseite aus erfolgen kann.

Zur Lösung dieser Aufgabe wird ausgehend von dem Steckverbinderelement der eingangs genannten Art vorgeschlagen, dass das Steckverbinderelement ausgebildet ist, von einer ersten Seite der Leiterplatte aus auf die Leiterplatte aufgesetzt und an dieser befestigt und kontaktiert zu werden, und zumindest teilweise durch eine in der Leiterplatte ausgebildete Öffnung hindurchzuragen, so dass eine Kontaktierung des Steckverbinderelements mit einem entsprechenden komplementären Steckerverbinderelement zur Herstellung eines elektrischen Kontakts über das durch die Öffnung der Leiterplatte hindurchragende Teil des Steckverbinderelements von einer der ersten Seite der Leiterplatte gegenüberliegenden zweiten Seite der Leiterplatte aus erfolgen kann.

Bei dem Steckverbinderelement kann also eine Steckrichtung, in der ein entsprechendes komplementäres Steckverbinderelement eingesteckt wird, durch die Öffnung in der Leiterplatte hindurch von einer der Bestückungsseite gegenüberliegenden Seite aus verlaufen. Damit ist es möglich, das Steckverbinderelement auch von einer der Bestückungsseite der Leiterplatte gegenüberliegenden Rückseite aus mit einem entsprechenden komplementären Steckverbinderelement zu kontaktieren.

Die in der Leiterplatte ausgebildete Öffnung bewirkt während der Montage des Steckverbinderelements auf der Leiterplatte zudem eine Aufnahme und Führung zumindest eines Teils des Steckverbinderelements, so dass die Montage insbesondere im Hinblick auf eine genaue Positionierung des Steckverbinderelements auf der Leiterplatte deutlich vereinfacht wird. Dies ist insbesondere bei einem Steckverbinderelement von Vorteil, das als ein SMD-Bauteil ausgebildet ist. Es ist sogar denkbar, auf Bestückungshilfen, wie sie bei der Montage von SMD-Bauteilen auf Leiterplatten zur Positionierung und Halterung der Bauteile während der Montage eingesetzt werden, bei der Montage eines SMD-Steckverbinderelements ganz zu verzichten.

Schließlich hat das erfindungsgemäße Steckverbinderelement den Vorteil, dass Zug- und Druckkräfte, die insbesondere bei der Kontaktierung des Steckverbinderelements mit einem entsprechenden passenden komplementären Steckverbinderelement auf das auf der Leiterplatte montierte Steckverbinderelement wirken können, durch die Leiterplatte aufgenommen werden. Dabei stützt sich der durch die Öffnung in der Leiterplatte hindurch ragende Teil des Steckverbinderelements an dem Rand der Öffnung ab. Dadurch werden die Lötstellen zwischen der Leiterplatte und dem montierten Steckverbinderelement entlastet. Die Öffnung in der Leiterplatte bildet gewissermaßen eine Art Zugentlastung für das zumindest teilweise darin angeordnete Steckverbinderelement.

Das erfindungsgemäße Steckverbinderelement kann auf beliebige Weise auf der Leiterplatte montiert sein. Gemäß einer vorteilhaften Weiterbildung der Erfindung wird vorgeschlagen, dass das Steckverbinderelement als ein unbedrahtetes Bauteil zur Montage auf der Leiterplatte nach Art eines oberflächenmontierten Bauelements (sog. Surface Mounted Device, SMD) ausgebildet ist. Alternativ wird vorgeschlagen, dass das Steckverbinderelement als ein bedrahtetes Bauteil zur Montage auf der Leiterplatte mittels Durchkontaktierung ausgebildet ist.

Ferner wird vorgeschlagen, dass das Steckverbinderelement als ein Steckerelement eines Steckverbinders oder als ein Buchsenelement eines Steckverbinders ausgebildet ist. Ein auf der Leiterplatte montiertes Steckerelement wird mittels eines entsprechenden passenden Buchsenelements kontaktiert. Dementsprechend wird ein auf der Leiterplatte montiertes Buchsenelement mittels eines entsprechenden passenden Steckerelements kontaktiert. Die Kontaktierung des auf der Leiterplatte montierten Steckverbinderelements kann von einer der Bestückungsseite der Leiterplatte gegenüberliegenden Rückseite der Leiterplatte aus erfolgen.

Gemäß einer vorteilhaften Ausführungsform der vorliegenden Erfindung wird vorgeschlagen, dass das Steckverbinderelement derart ausgebildet ist, dass der durch die Öffnung der Leiterplatte hindurchragende Teil des Steckverbinderelements mit der zweiten Seite der Leiterplatte bündig abschließt. Auf diese Weise ist es möglich, die Rückseite der Leiterplatte als eine ebene Fläche auszugestalten, mit der der in der Öffnung angeordnete Teil des Steckverbinderelements bündig abschließt. Eine solche Leiterplatte mit bündig abschließendem Steckverbinderelement ist besonders gut geeignet, zumindest einen Teil einer Außenwand eines Steuergerätegehäuses zu bilden, in dem die Leiterplatte angeordnet ist oder von dem die Leiterplatte zumindest einen Teil einer Außenwand bildet.

Es ist ferner vorteilhaft, wenn die zweite Seite der Leiterplatte eine Massenfläche bildet. Zu diesem Zweck kann die Rückseite der Leiterplatte mit einer metallischen, elektrisch leitfähigen Beschichtung versehen sein. Wenn die Leiterplatte zumindest einen Teil einer Außenwand eines Steuergerätegehäuses bildet, kann die metallische Beschichtung für eine elektromagnetische (EMV-) Abschirmung der in dem Gehäuse enthaltenen Halbleiterschaltung sorgen.

Wenn die Leiterplatte mit dem montierten Steckverbinderelement in einem Steuergerätegehäuse angeordnet ist oder sogar zumindest einen Teil der Außenwand des Gehäuses bildet, ist es besonders vorteilhaft, wenn sich das auf der Leiterplatte montierte Steckverbinderelement nach der Anordnung der Leiterplatte in dem Steuergerätegehäuse zumindest in eine Richtung an einem Abschnitt des Gehäuses abstützt. Damit können insbesondere Zug- und Druckkräfte, die auf das Steckverbinderelement wirken, besonders wirkungsvoll aufgenommen werden. Diese Kräfte können insbesondere bei der Kontaktierung des auf der Leiterplatte montierten Steckverbinderelements mit einem entsprechenden passenden komplementären Steckverbinderelement auf das montierte Steckverbinderelement wirken. Insbesondere ist daran gedacht, dass das Gehäuse Zug- und Druckkräfte aufnimmt, die bei einer Kontaktierung des montierten Steckverbinderelements mit einem entsprechenden passenden komplementären Steckverbinderelement auftreten können. Diese Kräfte werden also nicht nur durch die Leiterplatte, sondern zusätzlich auch durch das Steuergerätegehäuse aufgenommen. Das Abstützen des montierten Steckverbinderelements an einem Teil des Gehäuses kann die Zugentlastung durch den Rand der Öffnung der Leiterplatte also noch verbessern.

Weitere Merkmale und Vorteile der vorliegenden Erfindung werden nachfolgend anhand der Figuren näher erläutert. Es zeigen:
- Figur 1: einen Kraftfahrzeugscheinwerfer mit einem erfindungsgemäßen Kraftfahrzeugsteuergerät gemäß einer ersten bevorzugten Ausführungsform in einer perspektivischen Ansicht;
- Figur 2: ein erfindungsgemäßes Kraftfahrzeugsteuergerät gemäß einer anderen bevorzugten Ausführungsform in einer Schnittansicht; und
- Figur 3: eine erfindungsgemäße Halbleiterschaltung mit einem erfindungsgemäßen Steckverbinderelement gemäß einer bevorzugten Ausführungsform in einer Schnittansicht.

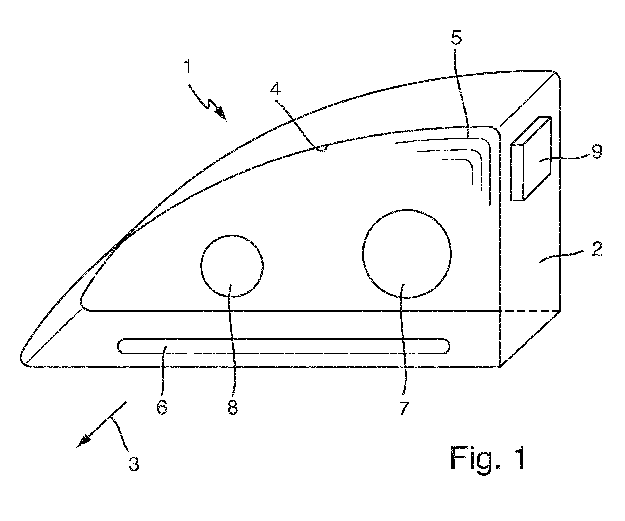

In Figur 1 ist eine Kraftfahrzeugbeleuchtungseinrichtung in Form eines Scheinwerfers 1 dargestellt. Der Scheinwerfer 1 umfasst ein Gehäuse 2, das vorzugsweise aus einem Kunststoffmaterial gefertigt ist. Das Gehäuse 2 weist in einer Lichtaustrittsrichtung 3 eine Lichtaustrittsöffnung 4 auf, die durch eine transparente Abdeckscheibe 5 verschlossen ist. Die Abdeckscheibe 5 ist vorzugsweise aus einem Kunststoffmaterial oder Glas gefertigt. Die Abdeckscheibe 5 kann ohne optisch wirksame Profile ausgebildet sein (sog. klare Scheibe) oder aber zumindest bereichsweise mit optisch wirksamen Profilen (z.B. Zylinderlinsen oder Prismen) versehen sein, um eine Streuung des hindurchtretenden Lichts insbesondere in horizontaler Richtung zu bewirken (sog. Streuscheibe).

Im Inneren des Gehäuses 2 sind verschiedene Licht- und/oder Leuchtenmodule angeordnet, die zur Erzeugung verschiedener Lichtverteilungen ausgebildet sind. In dem dargestellten Scheinwerfer 1 ist ein Leuchtenmodul 6 vorgesehen, das zur Erzeugung einer Leuchtenfunktion (z.B. Blinklicht, Positions- oder Begrenzungslicht, Tagfahrlicht) ausgebildet ist. Das Leuchtenmodul 6 kann eine beliebige Lichtquelle, beispielsweise in Form einer Glühlampe, einer Gasentladungslampe, einer Halbleiterlichtquelle (LED), aufweisen. Zur Bündelung des von der Lichtquelle ausgesandten Lichts und zur Erzeugung der gewünschten Leuchtenfunktion können beliebige Lichtsysteme genutzt werden. Denkbar ist beispielsweise eine Bündelung des von der Lichtquelle ausgesandten Lichts mittels eines Reflektors oder mittels einer Vorsatzoptik, die in Form eines massiven Körpers aus einem transparenten Material mit einer Lichteintrittsfläche und eine Lichtaustrittsfläche und totalreflektierenden Grenzflächen ausgebildet ist, wobei eine Bündelung des durch die Vorsatzoptik hindurchtretenden Lichts durch Brechung an der Lichteintrittsfläche und/oder der Lichtaustrittsfläche und/oder durch Totalreflektion an den Grenzflächen erfolgt. Das Leuchtmodul 6 kann ferner einen Lichtleiter aufweisen, in den Licht eingekoppelt und mittels Auskoppeloptiken über eine große Fläche verteilt zur Erzeugung der gewünschten Leuchtenfunktion wieder ausgekoppelt wird.

Des Weiteren sind in dem Scheinwerfer 1 zwei Lichtmodule 7, 8 vorgesehen, die jeweils alleine oder in einer Kombination miteinander zur Erzeugung einer gewünschten Lichtverteilung (z.B. Abblendlicht, Fernlicht, statisches Kurvenlicht, Stadtlicht, Landstraßenlicht, Autobahnlicht, Schlechtwetterlicht, Nebellicht) ausgebildet sind. Auch die Lichtmodule 7, 8 können mit beliebigen Lichtquellen, insbesondere mit Glühlampen, Gasentladungslampen oder Halbleiterlichtquelle (LEDs) zur Erzeugung des für die jeweilige Lichtfunktion benötigten Lichts ausgebildet sein. Ferner können die Lichtmodule 7, 8 beliebige Lichtsysteme aufweisen, um das von den Lichtquellen ausgesandte Licht zu bündeln und zur Erzeugung der gewünschten Lichtverteilung in geeigneter Weise zu formen. Insbesondere ist es denkbar, dass die Lichtmodule 7, 8 als ein Reflexionssystem oder als ein Projektionssystem ausgebildet sind.

Bei einem Reflexionssystem wird das von mindestens einer Lichtquelle erzeugte Licht mittels eines Reflektors gebündelt und das gebündelte Licht gegebenenfalls unter lichtformender Wirkung von optisch wirksamen Profilen der Abdeckscheibe 5 zur Erzeugung der gewünschten Lichtverteilung auf die Fahrbahn vor das Kraftfahrzeug reflektiert. Dabei ist der lichtbündelnde Reflektor vorzugsweise als ein Paraboloid, ein paraboloidähnlicher Reflektor oder als ein Freiformreflektor ausgebildet. Die Form des Reflektors bestimmt maßgeblich die Form und Lichtstärkeverteilung der resultierenden Lichtverteilung. Bei einem Projektionssystem wird das von mindestens einer Lichtquelle ausgesandte Licht mittels eines Reflektors oder einer Vorsatzoptik gebündelt und das gebündelte Licht mittels einer im Strahlengang angeordneten Projektionsoptik zur Erzeugung der gewünschten Lichtverteilung auf der Fahrbahn vor dem Kraftfahrzeug abgebildet. Dabei ist ein lichtbündelnder Reflektor vorzugsweise als ein Ellipsoid, ein ellipsoidähnlicher Reflektor oder als ein Freiformreflektor ausgebildet.

Die Lichtmodule 7, 8 können relativ zu dem Gehäuse 2 bewegbar angeordnet sein. Insbesondere ist es denkbar, eines oder mehrere der Lichtmodule 7, 8 in horizontaler Richtung verschwenkbar in dem Gehäuse 2 anzuordnen, damit eine dynamische Kurvenlichtfunktion realisiert werden kann. Ebenso ist es denkbar, eines oder mehrere der Lichtmodule 7, 8 in vertikaler Richtung verschwenkbar in dem Gehäuse 2 anzuordnen, damit eine Leuchtweiteverstellung realisiert werden kann. Zum Bewegung des einen oder der mehreren Lichtmodule 7, 8 wirken geeignete Aktoren auf die Lichtmodule 7, 8. Die Aktoren sind beispielsweise als ein Elektromotor, insbesondere als ein Schrittmotor, als ein Elektromagnet oder als ein piezoelektrischer Aktor ausgebildet.

Dem Kraftfahrzeugscheinwerfer 1 ist ferner ein Steuergerät 9 zugeordnet, das verschiedene Funktionen haben kann. So ist es beispielsweise denkbar, dass das Steuergerät 9 zum Betrieb der in dem Leuchtenmodul 6 und/oder mindestens einem der Lichtmodule 7, 8 verwendeten Lichtquellen dient. Bei Gasentladungslampen kann das Steuergerät eine Zündspannung zum Zünden des Lichtbogens und anschließend eine Betriebsspannung zur Aufrechterhaltung des Lichtbogens in einem dauerhaften Betrieb der Gasentladungslampe bereitstellen. Bei einer Halbleiterlichtquelle kann das Steuergerät 9 beispielsweise eine geeignete Versorgungsspannung beziehungsweise einen entsprechenden Betriebsstrom zur Verfügung stellen, damit die Halbleiterlichtquellen Licht einer gewünschten Helligkeit und Lichtfarbe aussenden. So kann beispielsweise durch eine durch das Steuergerät 9 realisierte Pulsweitenmodulation des Betriebsstroms eine Halbleiterlichtquelle in gewünschter Weise gedimmt werden.

Außerdem kann das Steuergerät 9 bei Verwendung mehrerer Halbleiterlichtquellen die einzelnen Lichtquellen gezielt dimmen und ein- oder ausschalten, so dass beispielsweise ein blendfreies Fernlicht (sog. Teilfernlicht) oder ein Markierungslicht (sog. Marker Light) erzeugt werden kann. Bei einem blendfreien Fernlicht setzt sich die Fernlichtverteilung aus einer Vielzahl von matrixartig nebeneinander und/oder übereinander angeordneten Lichtfeldern zusammen, wobei jedes der Lichtfelder durch mindestens eine Halbleiterlichtquelle erzeugt wird. Im vorderen Bereich des Kraftfahrzeugs sind Detektionsmittel vorgesehen, um vor dem Kraftfahrzeug befindliche andere Verkehrsteilnehmer (entgegenkommende oder vorausfahrende Fahrzeuge) oder Objekte zu detektieren. Es werden gezielt diejenigen Halbleiterlichtquellen gedimmt oder deaktiviert, in deren Lichtfeld ein anderer Verkehrsteilnehmer detektiert worden ist. Auf diese Weise wird stets eine optimale Ausleuchtung der Fahrbahn vor dem Kraftfahrzeug mit einer Fernlichtverteilung gewährleistet, ohne dass jedoch andere Verkehrsteilnehmer geblendet werden. Bei einem Markierungslicht wird ein vor dem Kraftfahrzeug detektiertes Objekt mit einem räumlich stark begrenzten Lichtbündel, das oberhalb einer Helldunkelgrenze einer abgeblendeten Lichtverteilung liegt, gezielt angestrahlt, um die Aufmerksamkeit des Fahrers des Kraftfahrzeugs auf das detektierte Objekt zu richten. Dieses Lichtbündel wird durch mindestens eine gezielt aktivierte Halbleiterlichtquelle erzeugt.

Ferner kann das Steuergerät 9 die Bewegung von einem oder mehreren der Lichtmodule 7, 8 des Scheinwerfers 1 in horizontaler und/oder vertikaler Richtung steuern. In diesem Fall könnte in dem Steuergerät 9 eine Kurvenlichtfunktionalität und/oder eine Leuchtweiteregelungsfunktionalität realisiert sein. Zur Realisierung dieser Funktionalitäten empfängt das Steuergerät 9 geeignete Sensorsignale von in dem Kraftfahrzeug verteilt angeordneten Sensoren, beispielsweise einem Lenkwinkelsensor (zur Ermittlung eines Radius einer durchfahrenen Kurve und zur Realisierung der dynamischen Kurvenlichtfunktion) oder mindestens eines Achsschenkelsensors (zur Ermittlung einer Neigung der Kraftfahrzeugkarosserie relativ zur Fahrbahn und zur Realisierung einer Leuchtweiteregelung). Selbstverständlich kann das Steuergerät 9 auch Sensorsignale von beliebig anderen Sensoren empfangen.

Das Steuergerät 9 verarbeitet die Sensorsignale nach vorgegebenen Algorithmen und erzeugt geeignete Ansteuersignale für Aktoren des Scheinwerfers 1, die zur Verstellung des einen oder der mehreren Lichtmodule 7, 8 vorgesehen sind. Ferner ist es denkbar, dass das Steuergerät 9 die Bewegung oder Verstellung von Teilen von einem oder mehreren der Lichtmodule 7, 8 steuert beziehungsweise regelt. In diesem Zusammenhang wäre es beispielsweise denkbar, dass das Steuergerät 9 die Bewegung einer im Strahlengang eines der Lichtmodule 7, 8 angeordneten Blendenanordnung steuert, so dass eine wirksame Kante der Blendenanordnung mehr oder weniger weit in den Strahlengang gefahren wird. Die Blendenanordnung kann mittels geeigneter Aktoren bspw. translatorisch verschoben oder geklappt werden. Auf diese Weise ist es möglich, eine adaptive Lichtverteilung zu erzeugen, die in Abhängigkeit von Fahrzeugzuständen und Umgebungsbedingungen (zum Beispiel Verkehrsdichte oder Wetter) variiert werden kann. Eine adaptive Lichtverteilung umfasst beispielsweise ein spezielles Stadtlicht, Landstraßenlicht oder Autobahnlicht sowie ein spezielles Schlechtwetterlicht. Selbstverständlich ist es denkbar, dass das Steuergerät 9 zur Steuerung beziehungsweise Regelung anderer, hier nicht explizit genannter Funktionen des Scheinwerfers 1 dient. Ebenso kann das Steuergerät 9 in entsprechender Weise auch zur Steuerung beziehungsweise Regelung einer als Heckleuchte ausgebildeten Beleuchtungseinrichtung ausgebildet sein. Schließlich ist es auch denkbar, dass das Steuergerät 9 eine beliebig andere Funktion in einem Kraftfahrzeug steuert beziehungsweise regelt. Dabei kann das Steuergerät 9 bspw. als ein Motorsteuergerät, ein Getriebesteuergerät, ein Abgasstrangsteuergerät, ein Fahrdynamiksteuergerät, ein ABS-Steuergerät ausgebildet sein. Das Steuergerät 9 könnte auch zur Steuerung beziehungsweise Regelung von Komfortfunktionen in dem Kraftfahrzeug ausgebildet sein. In diesem Zusammenhang könnte das Steuergerät 9 beispielsweise zur Steuerung beziehungsweise Regelung eines volldigitalen Armaturendisplays, einer Massagefunktion von Sitzen, eines Infotainmentsystems, etc. ausgebildet sein. Die in Figur 1 gezeigte Ausführungsform eines Steuergeräts 9 für einen Kraftfahrzeugscheinwerfer 1 ist lediglich eine von mehreren möglichen Verwendungsmöglichkeiten des erfindungsgemäßen Steuergeräts 9 in einem Kraftfahrzeug.

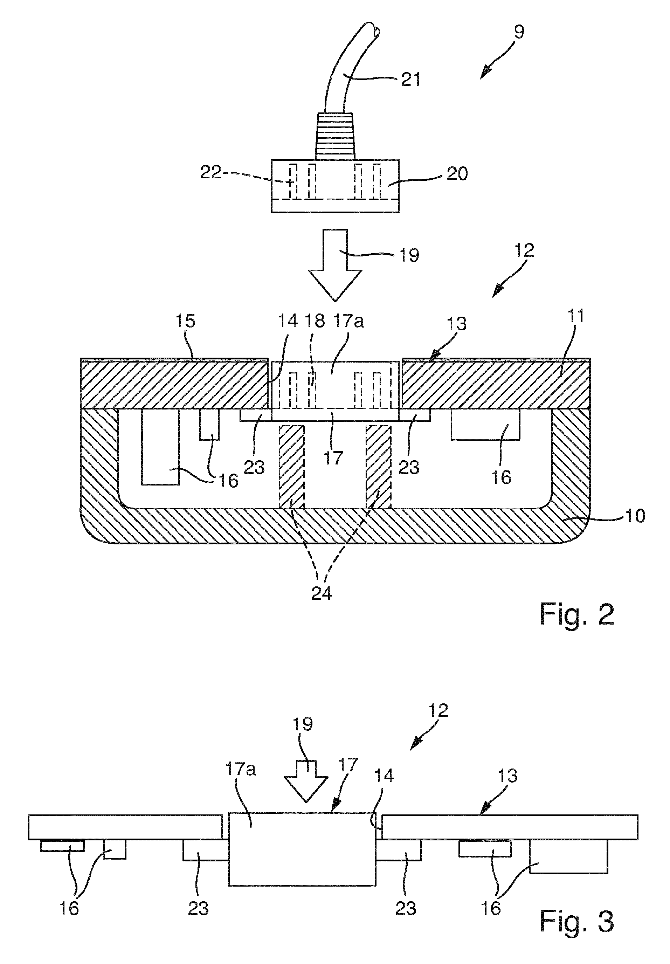

Ein Ausführungsbeispiel des erfindungsgemäßen Steuergeräts 9 ist im Detail in Figur 2 in einer Schnittansicht gezeigt. Das Steuergerät 9 weist ein Gehäuse auf, das ein erstes Gehäuseelement 10, das vorzugsweise aus Metall, insbesondere aus Aluminium hergestellt ist, und ein zweites Gehäuseelement 11 umfasst, das nach Art eines Gehäusedeckels mit dem ersten Gehäuseelement 10 lösbar verbunden ist. Durch Öffnen des Gehäusedeckels 11 wird der Zugang zum Gehäuseinneren freigegeben, um darin beispielsweise während der Montage eine geeignete Halbleiterschaltung zur Realisierung der Steuergerätefunktion anordnen zu können. Der Gehäusedeckel 11 kann ebenfalls aus Metall, insbesondere aus Aluminium gefertigt sein. In dem dargestellten Ausführungsbeispiel wird der Gehäusedeckel 11 jedoch durch eine erfindungsgemäße Halbleiterschaltung 12 gebildet. Die Halbleiterschaltung 12 kann mittels Schrauben oder auf beliebig andere Weise an dem Gehäuseelement 10 lösbar befestigt sein.

Die Halbleiterschaltung 12 umfasst eine Platine oder Leiterplatte 13, in der eine Öffnung 14 ausgebildet ist. Die Leiterplatte 13 weist eine Bestückungs- oder Vorderseite auf, von der aus elektrische Bauteile 16 montiert sind. Die elektrischen Bauteile 16 sind in Figur 2 lediglich schematisch eingezeichnet. Sie können beispielsweise elektrische Bauelemente (z.B. Kondensatoren, Widerstände, Spulen), aber auch Mikroprozessoren oder Mikrocontroller umfassen. Die elektrischen Bauteile 16 sind auf einer Vorder- oder Bestückungsseite der Leiterplatte 13 auf dieser mechanisch befestigt und elektrisch kontaktiert. Die Platine 13 kann an ihrer Außenseite oder Rückseite mit einer metallischen, elektrisch leitfähigen Beschichtung 15 versehen sein. Die metallische Beschichtung 15 sorgt für eine elektromagnetische (EMV-) Abschirmung der in dem Gehäuse 10, 11 enthaltenen elektrischen Bauteile 16 der Halbleiterschaltung 12. Die metallische Beschichtung 15 kann eine elektrische Massenfläche bilden.

Die Halbleiterschaltung 12 umfasst des Weiteren ein erfindungsgemäßes Steckverbinderelement 17, das von der Bestückungsseite der Leiterplatte 13 her auf dieser montiert ist. Die Montage des Steckverbinderelements 17 auf der Leiterplatte 13 umfasst eine mechanische Befestigung sowie eine elektrische Kontaktierung des Steckverbinderelements 17. Das Steckverbinderelement 17 kann als ein Steckerelement eines Steckverbinders oder als ein Buchsenelement eines Steckverbinders ausgebildet sein. In dem dargestellten Ausführungsbeispiel ist das Steckverbinderelement 17 als ein Steckerelement ausgebildet. Das Steckerelement 17 weist Kontaktstifte 18 auf, von denen in Figur 2 nur einige beispielhaft dargestellt sind. In das Steckerelement 17 kann in einer Steckrichtung 19 ein entsprechendes passendes komplementäres Buchsenelement 20 gesteckt werden, um eine elektrische Kontaktierung des Steckverbinders zu realisieren. Das Buchsenelement 20 kann an ein Kabel 21 angeschlossen sein, das Energieversorgungsleitungen und/oder Signalleitungen umfasst. Das Kabel 21 kann ein bspw. mittels eines Metallgeflechts oder einer Metallfolie abgeschirmtes Kabel sein. Das Buchsenelement 20 verfügt über Kontaktbuchsen 22, die an den Kontaktstiften 18 des Steckerelements 17 entsprechenden Positionen angeordnet und derart ausgebildet sind, dass sie die Kontaktstifte 18 zur Herstellung eines elektrischen Kontakts aufnehmen können. Selbstverständlich wäre es auch denkbar, dass das Steckverbinderelement 17 als ein Buchsenelement, entsprechend dem Buchsenelement 20, ausgebildet ist, wobei dann in Steckrichtung 19 ein entsprechendes passendes komplementäres Steckerelement, entsprechend dem Steckerelement 17, in das Buchsenelement gesteckt werden würde.

Das Steckverbinderelement 17 kann auf beliebige Weise auf der Bestückungsseite der Leiterplatte 13 montiert werden. Denkbar ist beispielsweise eine Ausgestaltung des Steckverbinderelements 17 als unbedrahtetes Bauteil, das nach Art eines oberflächenmontierten Bauelements (sog. Surface Mounted Device, SMD) auf der Leiterplatte 13 montiert wird. Dabei verfügt das Steckverbinderelement 17 vorzugsweise über Kontaktpunkte, mit denen es an lötfähigen Anschlussflächen der Leiterplatte 13 direkt auf die Leiterplatte 13 gelötet wird. Dies kann beispielsweise mit einem sogenannten Re-Flow-Lötverfahren erfolgen. Das montierte SMD-Steckverbinderelement 17 ist durch das Verlöten der Kontaktpunkte des Steckverbinderelements 17 mit den Anschlussflächen der Leiterplatte 13 auf dieser sowohl mechanisch befestigt als auch elektrisch kontaktiert. Diese Technik wird auch als Oberflächenmontage (Surface Mounting Technology SMT) bezeichnet. Zur Halterung des Steckverbinderelements 17 während der Montage und/oder als zusätzliche mechanische Befestigung kann das Steckverbinderelement 17 auf der Leiterplatte 13 festgeklebt werden.

Ebenfalls denkbar ist es, dass das Steckverbinderelement 17 als ein bedrahtetes Bauteil ausgebildet ist, das mittels Durchkontaktierung auf der Leiterplatte 13 montiert wird. Dabei sind Vertiefungen oder Bohrungen in der Leiterplatte 13 vorhanden, die mit einer elektrisch leitfähigen Metallbeschichtung versehen sind. Die durchkontaktierten Bohrungen dienen als Lötaugen, in welche Drähte des Steckverbinderelements 17 eingeführt und verlötet werden. Auf diese Weise ist sowohl eine mechanische Befestigung als auch eine elektrische Kontaktierung des Steckverbinderelements 17 auf der Leiterplatte 13 gegeben.

Die mechanische Befestigung und elektrische Kontaktierung des Steckverbinderelements 17 auf der Bestückungsseite der Leiterplatte 13, sei es durch das Verlöten von Kontaktpunkten eines SMD-Steckverbinderelements 17 mit Anschlussflächen der Leiterplatte 13 oder sei es durch ein Verlöten von Drähten eines bedrahteten Steckverbinderelements 17 in durchkontaktierten Bohrungen der Leiterplatte 13, erfolgt in dem dargestellten Beispiel in Bereichen 23 des Steckverbinderelements 17. Die Bereiche 23 umfassen die Kontaktpunkte bzw. die Drähte zur Befestigung und Kontaktierung des Steckverbinderelements 17 an der Leiterplatte 13. Die Bereiche 23 können integraler Bestandteil des Steckverbinderelements 17 sein. Von den Kontaktstiften 18 bzw. den Kontaktbuchsen 22 verlaufen in dem Steckverbinderelement 17 intern Leitungen zu den Bereichen 23 bzw. den dort angeordneten Kontaktpunkten oder Kontaktdrähten. Das Steckverbinderelement beziehungsweise im Falle eines Steckerelements 17 die Kontaktstifte 18 oder im Falle eines Buchsenelements 20 die Kontaktbuchsen 22 stehen über auf und/oder in der Leiterplatte 13 ausgebildete Leiterbahnen (nicht dargestellt) in geeigneter Weise mit den elektrischen Bauteilen 16 der Halbleiterschaltung 12 in Verbindung.

Zur Montage des Steckverbinderelements 17 auf der Leiterplatte 13 wird das Steckverbinderelement 17 von der Bestückungsseite der Leiterplatte 13 aus auf diese aufgesetzt und an dieser befestigt und elektrisch kontaktiert. Das Steckverbinderelement 17 ragt zumindest teilweise durch die in der Leiterplatte 13 ausgebildete Öffnung 14 hindurch, so dass eine Kontaktierung des Steckverbinderelements 17 mit einem entsprechenden passenden Steckverbinderelement 20 zur Herstellung eines elektrischen Kontakts über das durch die Öffnung der Leiterplatte 14 hindurchragende Teil 17a des Steckverbinderelements 17 von der der Bestückungsseite der Leiterplatte 13 gegenüberliegenden Rückseite der Leiterplatte 13 aus erfolgen kann. Ein wichtiger Aspekt der vorliegenden Erfindung ist also, dass das Steckverbinderelement 17 von einer ersten Seite der Leiterplatte 13, nämlich der Bestückungsseite her auf der Leiterplatte 13 montiert wird, und durch die Öffnung 14 hindurch von der gegenüberliegenden zweiten Seite der Leiterplatte 13, nämlich der Rückseite oder Außenseite, her mit einem entsprechenden passenden komplementären Steckverbinderelement 20 kontaktiert werden kann.

Vorzugsweise ist das Steckverbinderelement 17 derart ausgebildet und insbesondere derart an die Stärke der Leiterplatte 13 angepasst, dass der durch die Öffnung 14 der Leiterplatte 13 hindurchragende Teil 17a des Steckverbinderelements 17 mit der Rückseite oder Außenseite der Leiterplatte 13 bündig abschließt.

Bei dem in Figur 2 gezeigten Beispiel wird der Deckel 11 des Gehäuses des Steuergeräts 9 durch die Halbleiterschaltung 12 bzw. durch deren Leiterplatte 13 gebildet. Die Halbleiterschaltung 12 ist also außen an dem Steuergerätegehäuse befestigt. Selbstverständlich kann die erfindungsgemäße Halbleiterschaltung 12 umfassend die Leiterplatte 13 und das darauf montierte Steckverbinderelement 17 auch im Inneren des Gehäuses 10, 11 des Steuergeräts 9 angeordnet sein. In diesem Fall könnte dann ein zusätzlicher separater Gehäusedeckel 11 vorgesehen werden, der nicht durch die Leiterplatte 13 gebildet ist. Der separat vorzusehende Gehäusedeckel 11 müsste außerdem eine Öffnung aufweisen, die an einer Position vorgesehen ist, welche der Position der Öffnung 14 in der Leiterplatte 13 bei in dem Gehäuse 10, 11 montierter Halbleiterschaltung 12 entspricht. Durch die Öffnung in dem Gehäusedeckel 11 könnte dann das entsprechende passende komplementäre Steckverbinderelement 20 hindurchgeführt und mit dem auf der Leiterplatte 13 montierten Steckverbinderelement 17 bzw. dessen durch die Öffnung 14 hindurchragenden Teil 17a in elektrischen Kontakt gebracht werden.

Auf das Steckverbinderelement 17 wirken beispielsweise beim Herstellen und Lösen eines elektrischen Kontakts mit einem entsprechenden passenden komplementären Steckverbinderelement 20 erhöhte Kräfte, insbesondere Zug- und/oder Druckkräfte. Damit das auf der Leiterplatte 13 montierte Steckverbinderelement 17 die auf das Steckverbinderelement 17 wirkenden Kräfte besser aufnehmen kann, kann sich das Steckverbinderelement 17 an einem Rand der Öffnung 14 an der Leiterplatte 13 abstützen. Zudem ist es denkbar, dass sich das Steckverbinderelement 17 bei in oder an dem Gehäuse 10, 11 montierter Halbleiterschaltung 12 an mindestens einem Abschnitt des Gehäuses 10, 11 abstützt. Auf das Steckverbinderelement 17 wirkende Druckkräfte könnten beispielsweise dadurch von dem Gehäuse 10, 11 aufgenommen werden, dass sich das Steckverbinderelement 17 bei in oder auf dem Gehäuse 10, 11 angeordneter Halbleiterschaltung 12 an Gehäuseabschnitten 24 abstützt, die sich vom Boden des ersten Gehäuseteils 10 nach oben in Richtung des Steckverbinderelements 17 erstrecken.

In Figur 3 ist ein bevorzugtes Ausführungsbeispiel der erfindungsgemäßen Halbleiterschaltung 12 im Detail dargestellt. In diesem Zusammenhang wird auf die Ausführungen zu Figur 2 verwiesen.

## Patentansprüche

1. Steckverbinderelement (17) zur Montage auf einer Leiterplatte (13), **dadurch gekennzeichnet, dass** das Steckverbinderelement (17) ausgebildet ist, von einer ersten Seite der Leiterplatte (13) aus auf die Leiterplatte (13) aufgesetzt und an dieser befestigt und kontaktiert zu werden, und zumindest teilweise durch eine in der Leiterplatte (13) ausgebildete Öffnung (14) hindurchzuragen, so dass eine Kontaktierung des Steckverbinderelements (17) mit einem entsprechenden komplementären Steckerverbinderelement (20) zur Herstellung eines elektrischen Kontakts über das durch die Öffnung (14) der Leiterplatte (13) hindurchragende Teil (17a) des Steckverbinderelements (17) von einer der ersten Seite der Leiterplatte (13) gegenüberliegenden zweiten Seite der Leiterplatte (13) aus erfolgen kann.

2. Steckverbinderelement (17) nach Anspruch 1, **dadurch gekennzeichnet, dass** das Steckverbinderelement (17) als ein unbedrahtetes Bauteil zur Montage auf der Leiterplatte (13) nach Art eines oberflächenmontierten Bauelements ausgebildet ist.

3. Steckverbinderelement (17) nach Anspruch 1, **dadurch gekennzeichnet, dass** das Steckverbinderelement (17) als ein bedrahtetes Bauteil zur Montage auf der Leiterplatte (13) mittels Durchkontaktierung ausgebildet ist.

4. Steckverbinderelement (17) nach einem der Ansprüche 1 bis 3, **dadurch gekennzeichnet, dass** das Steckverbinderelement (17) als ein Steckerelement eines Steckverbinders oder als ein Buchsenelement eines Steckverbinders ausgebildet ist.

5. Steckverbinderelement (17) nach einem der Ansprüche 1 bis 4, **dadurch gekennzeichnet, dass** das Steckverbinderelement (17) derart ausgebildet ist, dass der durch die Öffnung (14) der Leiterplatte (13) hindurchragende Teil (17a) des Steckverbinderelements (17) mit der zweiten Seite der Leiterplatte (13) bündig abschließt.

6. Halbleiterschaltung (12) umfassend eine Leiterplatte (13), auf der Leiterbahnen ausgebildet sind und zumindest ein Steckverbinderelement (17) montiert ist, **dadurch gekennzeichnet, dass** in der Leiterplatte (13) eine Öffnung (14) ausgebildet ist und dass das Steckverbinderelement (17) ausgebildet ist, von einer ersten Seite der Leiterplatte (13) aus auf die Leiterplatte (13) aufgesetzt und an dieser befestigt und kontaktiert zu werden, und zumindest teilweise durch die in der Leiterplatte (13) ausgebildete Öffnung (14) hindurchzuragen, so dass eine Kontaktierung des Steckverbinderelements (17) mit einem entsprechenden komplementären Steckerverbinderelement (20) zur Herstellung eines elektrischen Kontakts über das durch die Öffnung (14) der Leiterplatte (13) hindurchragende Teil (17a) des Steckverbinderelements (17) von einer der ersten Seite der Leiterplatte (13) gegenüberliegenden zweiten Seite der Leiterplatte (13) aus erfolgen kann.

7. Halbleiterschaltung (12) nach Anspruch 6, **dadurch gekennzeichnet, dass** das Steckverbinderelement (17) nach einem der Ansprüche 2 bis 5 ausgebildet ist.

8. Halbleiterschaltung (12) nach Anspruch 6 oder 7, **dadurch gekennzeichnet, dass** die zweite Seite der Leiterplatte (13) eine Massenfläche (15) bildet.

9. Halbleiterschaltung (12) nach einem der Ansprüche 6 bis 8, **dadurch gekennzeichnet, dass** die Leiterplatte (13) zumindest einen Teil einer Außenwand eines Steuergerätegehäuses (10, 11) bildet, in dem die Halbleiterschaltung (12) angeordnet ist.

10. Kraftfahrzeugsteuergerät (9) umfassend ein Gehäuse (10, 11) und eine darin angeordnete Halbleiterschaltung (12), die Halbleiterschaltung (12) umfassend eine Leiterplatte (13), auf der Leiterbahnen ausgebildet sind und zumindest ein Steckverbinderelement (17) montiert ist, **dadurch gekennzeichnet, dass** in der Leiterplatte (13) eine Öffnung (14) ausgebildet ist und dass das Steckverbinderelement (17) ausgebildet ist, von einer ersten Seite der Leiterplatte (13) aus auf die Leiterplatte (13) aufgesetzt und an dieser befestigt und kontaktiert zu werden, und zumindest teilweise durch die in der Leiterplatte (13) ausgebildete Öffnung (14) hindurchzuragen, so dass eine Kontaktierung des Steckverbinderelements (17) mit einem entsprechenden komplementären Steckerverbinderelement (20) zur Herstellung eines elektrischen Kontakts über das durch die Öffnung (14) der Leiterplatte (13) hindurchragende Teil (17a) des Steckverbinderelements (17) von einer der ersten Seite der Leiterplatte (13) gegenüberliegenden zweiten Seite der Leiterplatte (13) aus erfolgen kann, wobei die Leiterplatte (13) zumindest einen Teil einer Außenwand des Steuergerätegehäuses (10, 11) bildet.

11. Steuergerät (9) nach Anspruch 10, **dadurch gekennzeichnet, dass** die Halbleiterschaltung (12) nach Anspruch 7 oder 8 ausgebildet ist.

12. Steuergerät (9) nach Anspruch 10 oder 11, **dadurch gekennzeichnet, dass** sich das auf der Leiterplatte (13) montierte Steckverbinderelement (17) nach der Anordnung der Halbleiterschaltung (12) in dem Steuergerätegehäuse (10, 11) zumindest in eine Richtung an einem Abschnitt (24) des Gehäuses (10, 11) abstützt.
